# EUROPÄISCHE PATENTSCHRIFT

(11) **EP 0 744 994 B1**
(45) Veröffentlichungstag und Bekanntmachung des Hinweises auf die Patenterteilung: **01.09.1999**
(21) Anmeldenummer: 95910485.2
(22) Anmeldetag: 15.02.1995
(51) Int. Cl.: B01L 3/00, G01N 21/03

(54) **MIKROTITERPLATTE**
MICROTITRATION PLATE
PLAQUE DE MICROTITRAGE

(30) Priorität: 19.02.1994 DE 4405375
(43) Veröffentlichungstag der Anmeldung: 04.12.1996
(73) Patentinhaber: DR. FRITZ NERBE NACHFOLGER JÜRGEN NERBE OHG, 21423 Winsen/Luhe (DE)
(72) Erfinder: KLÖCKING, Renate, D-99100 Dachwig (DE); WUTZLER, Klaus, Peter, D-99097 Erfurt (DE)
(74) Vertreter: Emmel, Thomas, Dipl.-Biol., Dr.
(86) Internationale Anmeldenummer: EP9500545
(87) Internationale Veröffentlichungsnummer: WO9522406

(56) Entgegenhaltungen:
- WO-A-91/17832
- WO-A-93/06456
- US-A- 4 294 924
- US-A- 4 599 315

## Beschreibung

Die Erfindung bezieht sich auf eine Mikrotiterplatte nach dem Oberbegriff des Anspruches 1.

Mikrotiterplatten werden heutzutage im großen Umfang im Laborbereich zu z.B. serologischen, immunologischen oder auch virologischen Reihenuntersuchungen eingesetzt. Sie weisen mindestens einen, in der Regel jedoch eine Vielzahl von Probenbehältern auf, in denen die unterschiedlichsten Reaktionen durchgeführt werden können. Bei herkömmlichen Mikrotiterplatten ist der Abstand der Probenbehälter zueinander genormt, so daß mehrere Probenbehälter gleichzeitig mit einer handelsüblichen Mehrkanalpipette beschickt werden können. Zur Wahrung der Sterilität und auch zum Schutz vor Austrocknung bei Aufbewahrung in z.B. einem Brutschrank sind die Platten mit einem abnehmbaren Deckel verschlossen.

Die Auswertung der in den Mikrotiterplatten durchgeführten Untersuchungen kann in Abhängigkeit von der Art der Aufgabenstellung auf vielfältige Weise erfolgen. So gibt es z. B. spezielle Photometer, in die die Platten insgesamt eingesetzt werden, und die dann z. B. die Trübung oder eine Färbung in den einzelnen Probenbehältern messen. Handelt es sich z.B. um einen RIA-Ansatz, so erfolgt die Auswertung in einem ebenfalls speziell auf Mikrotiterplatten angepaßten β-Counter etc.

Einen Spezialfall stellt die Auswertung zellbiologischer, z.B. virologischer Untersuchungen dar. Bei solchen Untersuchungen werden in der Regel Zellkulturen in speziell ausgerüsteten Mikrotiterplatten mit sogenannter TC-Qualität (Tissue Culture) kultiviert. Die Anzucht der Zellen kann z.B. in Suspension erfolgen. Häufiger jedoch ist vorgesehen, daß die Zellkulturen, z.B. Verozellen oder Fibroblasten, in einer Schicht (Monolayer) auf dem Bodenbereich der Probenbehälter aufwachsen. Untersucht werden soll z.B. der Grad der durch Virusinfektion oder durch toxische Substanzen hervorgerufenen Zellschädigung. Hierzu ist in der Regel eine morphologische Analyse der Zellkulturen erforderlich, da die in Abhängigkeit von der Schädigung auftretende Formveränderung der Zellen erkannt werden muß. Eine solche Auswertung kann an lebenden Zellen nur mittels Mikroskopie erfolgen. Da es sich um ungefärbte Präparate handelt, wird man zur Auswertung vorzugsweise die Phasenkontrastmikroskopie einsetzen. Für eine sichere Aussage ist weiterhin erforderlich, daß der gesamte Bodenbereich bzw. bei Anzucht der Zellen in Suspension der gesamte Querschnitt der Probehälter durchmustert wird, da bereichsweise unterschiedliche Zellschädigungsbilder auftreten können.

Die Beobachtung der z.B. am Probenbehälterboden adhärierten Zellen mit insbesondere einem Phasenkontrastmikroskop bereitet jedoch aus folgenden Gründen Schwierigkeiten. Wie zuvor bereits erwähnt, sind die Probenbehälter mit Flüssigkeit gefüllt, z.B. Nährlösung. Die Flüssigkeitsoberfläche ist aufgrund des geringen Durchmessers der Probenbehälter nicht plan, sondern bildet vielmehr einen Meniskus aus. Die meniskusförmige Oberfläche wirkt wie eine optische Linse, die verhindert, daß die Ringblende in der Phasenplättchenebene abgebildet wird. Die Zusammenwirkung von Ringblende und Phasenplättchen ist die Voraussetzung für die Funktionsfähigkeit einer Phasenkontrasteinrichtung. Eine befriedigende Möglichkeit, die hier störenden Oberflächenmenisken in den Probebehältern bei der mikroskopischen Untersuchung zu beseitigen, existiert bislang nicht.

Es sind zwar bereits aus der DE-A-36 19 107 gattungsgemäße Probenträger bekannt geworden, bei denen am Deckel nach unten weisende Ansätze vorgesehen sind, die in aufgesetztem Zustand des Deckels in die Probenbehälter eintauchen und dort mit ihren planen Abschlußflächen in Kontakt mit den Probenflüssigkeiten gelangen, deren Oberfläche im Kontaktbereich naturgemäß dann ebenfalls plan wird. Bei der bekannten Vorrichtung soll über die Ansätze in den Probebehältern eine definierte Schichtdicke eingestellt werden, und so eine vergleichende automatische photometrische Auswertung der Proben erleichtert bzw ermöglicht werden. Der Einsatz derartiger Probenträger für die oben angesprochenen virologischen Untersuchungen mit anschließender mikroskopischer Auswertung verbietet sich allerdings aus mehreren Gründen. Ein Grund ist, daß die eintauchenden Ansätze nicht den gesamten Behälterquerschnitt abdecken. Eine vollständige Durchmusterung der auf dem Behälterboden adherierten Zellen ist also nicht möglich. Ein weiterer Grund ist, daß die beim Eintauchen der Ansätze verdrängte Probeflüssigkeit in benachbarte Behälter gelangen und diese kontamieren kann. Dies muß zumindest bei virologischen Untersuchungen sicher ausgeschlossen werden.

Desweiteren geht aus der US-A-45 99 315 eine Mikrotiterplatte mit einer Vielzahl an trichterförmigen Probebehältern und einem Deckel hervor, der, auf die Mikrotiterplatte aufgesetzt, die Behälteröffnungen abdeckt. Der Deckel ist mit einer Vielzahl an nach unten weisenden Ansätzen versehen, die beim Einführen in die trichterförmigen Probebehälter die darin befindliche Prüfflüssigkeit in Richtung Behälteröffnung verdrängen. Durch diese Verringerung der Testflüssigkeitssäule im Probebehälter können am Behälterboden befindliche Zellbestandteile auch bei gefärbten Prüflösungen über die transparenten Deckelansätze beobachtet werden.

Aufgabe der Erfindung ist es, eine Mikrotiterplatte bereitzustellen, die eine problemlose und vollständige Auswertung ihrer Probenbehälter mittels spezieller mikroskopischer Verfahren, insbesondere mittels Phasenkontrastmikroskopie erlaubt, und bei der die Gefahr einer Kreuzkontamination zwischen den Probebehältern auf ein Minimum reduziert ist.

Gelöst wird diese Aufgabe mit einer Mikrotiterplatte, die die Merkmale des Anspruches 1 aufweist.

Ausgehend vom Stand der Technik ist auch hier vorgesehen, daß der die Probenbehälter der Mikrotiterplatte abdeckende Deckel mit nach unten weisenden Ansätzen versehen ist, deren freie Enden eine plane Abschlußfläche aufweisen. Die Ansätze sind so auf dem Deckel angeordnet und ausgebildet, daß bei aufgesetztem Deckel jedem Ansatz ein Behälter zugeordnet ist. Erfindungsgemäß ist nun jeder Ansatz so dimensioniert, daß er bei auf die Platte abgesenktem Deckel mit seiner planen Abschlußfläche auf der Öffnung des zugeordneten Behälters aufsetzt und dessen Querschnitt mindestens abdeckt.

Bei auf die Platte abgesenktem Deckel geraten die planen Abschlußflächen der Ansätze damit in schlüssigen Kontakt mit der gesamten Flüssigkeitsoberfläche (in entsprechend gefüllten Probenbehältern), wobei der störende Meniskus an der Flüssigkeitsoberfläche über den gesamten Behälterquerschnitt beseitigt wird. Die Probenbehälter können ohne weiteres vollständig über ihren gesamten Querschnitt mit z.B. einem Phasenkontrastmikroskop untersucht werden. Es versteht sich, daß die Behälter der erfindungsgemäßen Mikrotiterplatte eine plane Bodenfläche aufweisen. Es versteht sich weiterhin, daß der Deckel und insbesondere die Ansätze aus transparentem Material hergestellt sind, das darüber hinaus nicht zelltoxisch ist.

Erfindungsgemäß ist weiterhin vorgesehen, daß jede Behälteröffnung von seitlichen flüssigkeitsdichten Wänden umgeben ist, die jeweils einen nach oben offenen Raum begrenzen. Dieser Raum hat einen im Vergleich zu der Behälteröffnung größeren Querschnitt. Er dient sozusagen als Überlauf für Probenflüssigkeit, die möglicherweise aus den Probenbehältern austritt, wenn der Deckel mit seinen Ansätzen auf die Behälteröffnung aufgesetzt wird. Die seitlich die Behälteröffnung umgebenden Wände sollen sicherstellen, daß austretende Flüssigkeit nicht in benachbarte Behälter gelangt und dort eine ungewollte Kontamination verursacht.

Es muß dabei allerdings darauf geachtet werden, daß der Raum und der Ansatz so dimensioniert sind, daß zwischen ihren gegenüberliegenden Wandbereichen keine Kapillareffekte auftreten, die ebenfalls zu einer Vermischung von Probeflüssigkeit benachbarter Behälter führen könnten. Es muß daher bei aufgesetztem Deckel ein ausreichender Abstand zwischen dem Ansatz und den Wänden des Raumes gegeben sein.

Vorteilhafte Ausgestaltungen der erfindungsgemäßen Mikrotiterplatte sind in den abhängigen Ansprüchen 2 bis 17 beschrieben.

Die Qualität der mikroskopischen Untersuchung hängt im wesentlichen davon ab, daß der Deckel, die Ansätze und auch die Behälter aus möglichst hochtransparentem Material ausgebildet sind und weiterhin keine Materialfehler aufweisen, die zu unerwünschten Lichtbrechungen führen könnten. In diesem Zusammenhang sieht eine vorteilhafte Ausgestaltung gemäß Anspruch 2 vor, daß die Ansätze hohl ausgebildet sind. Der Querschnitt des Hohlraumes entspricht dabei mindestens dem Querschnitt der Behälteröffnung. Bei dieser Ausgestaltung wird auf effektive Weise die Schichtdicke des während des Mikroskopierens im Lichtweg befindlichen Kunststoffmaterials reduziert. Eine weitere Verbesserung erzielt man, wenn, wie in Anspruch 3 vorgesehen, der in dem Ansatz vorgesehene Hohlraum sich bis an die Oberfläche des Deckels erstreckt. In diesem Fall verbleibt im Lichtweg nur noch die plane Abschlußfläche des Ansatzes und der Boden des Probenbehälters. Werden die Behälter und/oder die Ansätze darüber hinaus im Wege der Einzelspritzung gefertigt, kann man bei entsprechender Verfahrenssteuerung und Anordnung der Spritzdüsen Wände mit geringer Dicke herstellen, die darüber hinaus vollkommen frei von optisch störenden Fließnähten sind. Insbesondere bei einer derartigen bevorzugten Fertigungsweise lassen sich Platten erzielen, die eine optimale mikroskopische Untersuchung der Behälter, insbesondere im Inversmikroskop erlauben.

Eine weitere vorteilhafte Ausgestaltung sieht gemäß Anspruch 4 vor, daß der von den seitlichen Wänden begrenzte Raum sich ausgehend von den Behälteröffnungen nach oben hin erweitert. Diese Ausgestaltung trägt der Tatsache Rechnung, daß der mit den Ansätzen versehene Deckel in der Regel nur während des Mikroskopiervorganges vollständig auf die Platte abgesenkt wird. Zwischen den Mikroskopiervorgängen wird der Deckel etwas angehoben bzw. sogar durch einen herkömmlichen Deckel ohne nach unten weisende Ansätze ausgetauscht, um eine Belüftung der Probenbehälter zu gewährleisten. Die vorteilhalte Ausgestaltung gemäß Anspruch 4 stellt in diesem Zusammenhang sicher, daß die durch die Ansätze in den Raum verdrängte Flüssigkeit beim Anheben des Deckels wieder in die Probenbehälter zurücklaufen kann. Auf diese Weise kann das Probevolumen konstant gehalten werden.

Insbesondere von Vorteil ist in diesem Zusammenhang eine Ausgestaltung gemäß Anspruch 5, bei der der von den seitlichen Wänden begrenzte Raum in einem unteren Bereich trichterförmig erweitert ist. In diesen Bereich verdrängte Probeflüssigkeit kann besonders gut nach Anheben des Deckels wieder zurücklaufen.

In diesem Zusammenhang sieht eine weitere Ausgestaltung gemäß Anspruch 6 vor, daß mindestens die unteren Wandbereiche des Raumes benetzbar ausgebildet sind. Von diesen Wandbereichen kann Probeflüssigkeit ablaufen, ohne daß Laufspuren übrig bleiben. Die Benetzbarkeit kann man z.B. durch Behandlung der gewünschten Wandbereiche mit Chromschwefelsäure (übersättigte Lösung von Bichromat in konzentrierter Schwefelsäure) für 2 bis 3 Minuten erreichen. Die Chromschwefelsäure läßt sich problemlos durch Spülen entfernen, ohne daß eventuelle toxische Rückstände in der Platte verbleiben.

Eine weitere vorteilhafte Ausgestaltung der Erfindung sieht gemäß Anspruch 7 vor, daß der Raum zunächst einen sich unmittelbar an die Behälteröffnung anschließenden Bereich mit über seine Höhe konstantem Querschnitt aufweist. Der Querschnitt dieses Bereiches ist etwas größer als der Außenquerschnitt des Ansatzes im Bereich seiner planen Abschlußfläche. Die Aufgabe dieses Bereiches besteht darin, die Ansätze bei abgesenktem Deckel in Mikroskopierstellung zu den Behälteröffnungen zu zentrieren und in dieser zentrierten Position zu halten. Auch hierdurch wird die mikroskopische Auswertung erleichtert. Die zur Zentrierung der Ansätze dienenden Bereiche können eine Höhe aufweisen, die lediglich einen Bruchteil (weniger als ein Zehntel) der Höhe des gesamten Raumes beträgt.

An sie können sich nach oben hin z.B. trichterförmige Erweiterungen anschließen.

Es existieren zur Zeit im wesentlichen zwei unterschiedliche Typen von Mikrotiterplatten. Die beiden Typen unterscheiden sich in der Anordnung der Probenbehälter an der sie aufnehmenden Trägerfläche. Bei dem einen Typ Platte schließen die Behälteröffnungen plan mit dieser Trägerfläche ab. Die Behälter hängen also von der Trägerfläche gehalten nach unten. Bei dem anderen Typ Platte sind die Probenbehälter mit ihren Böden mit der Trägerfläche verbunden und stehen nach oben hin frei über. Beide Typen von Mikrotiterplatten (und auch Zwischentypen) können bei der Verwirklichung der Erfindung und ihrer Ausgestaltungen zugrundegelegt werden.

So kann man z.B. gemäß Anspruch 8 den zuletzt genannten Typ von Mikrotiterplatte verwenden, bei dem mindestens ein Teil der Behälter mit ihren an die Öffnung angrenzenden Bereichen frei übersteht. Vorteilhaft an dieser Ausgestaltung ist, daß bei Verwendung derartiger Platten jeder der Probenbehälter (zumindest teilweise) von einem freien Raum umgeben ist. In diesen freien Raum kann über den Rand des Probenbehälters austretende Flüssigkeit abfließen. Zumindest bei vorsichtiger Handhabung läßt sich der erfindungsgemäße mit Ansätzen versehene Deckel auf die Platte absenken, ohne daß dabei zwangsläufig (wie bei dem anderen beschriebenen Typ Platte) austretende Flüssigkeit in benachbarte Probenbehälter fließt. Allerdings ist auch hier vorgesehen, die Behälteröffnungen nach oben hin mit seitlichen Wänden zu umgeben, um jedes Risiko einer Kreuzkontamination z.B. durch Spritzer etc. zu vermeiden. In diesem Zusammenhang kann gemäß Anspruch 9 weiterhin vorgesehen sein, daß die seitlichen Wände ebenfalls von der Trägerfläche (auf der auch die Behälter angeordnet sind) ausgehen. Diese Ausgestaltung dürfte insbesondere fertigungstechnisch besonders leicht zu verwirklichen sein.

Wie oben bereits angesprochen, weisen herkömmliche Mikrotiterplatten eine Vielzahl von Probenbehältern auf, die jeweils in parallelen Reihen angeordnet sind. Gängigerweise sind 96 Probenbehälter vorgesehen, die in 12 Reihen à 8 Behältern angeordnet sind. Für derartige Platten (unabhängig von dem Typ der oben angesprochenen Mikrotiterplatten) sieht Anspruch 10 nun in vorteilhafter Weise vor, daß die seitlichen, jede Bebälteröffnung umgebenden Wände durch gitterartig angeordnete parallel und senkrecht zu den Behälterreihen verlaufende Stege gebildet sind. Eine derartige Ausgestaltung ist ebenfalls in fertigungstechnischer Hinsicht besonders einfach zu verwirklichen und ermöglicht weiterhin eine optimale Ausnutzung des zur Verfügung stehenden Raums.

Bei der erfindungsgemäßen Mikrotiterplatte stellt sich ein weiteres, zuvor bereits angesprochenes Problem. Solange der Deckel abgesenkt ist und damit die Ansätze in Kontakt mit der Flüssigkeitsoberfläche sind, kommt es nicht zu einer ausreichenden Belüftung der Probenbehälter. Zwischen den Mikroskopiervorgängen ist es daher erforderlich, die Ansätze außer Kontakt mit der Probenflüssigkeit zu bringen. Dies kann z.B. dadurch geschehen, daß der mit den Ansätzen versehene Deckel abgenommen und ein herkömmlicher ansatzfreier Deckel aufgesetzt wird. Nachteilig an dieser Möglichkeit ist allerdings der relativ hohe Materialaufwand. Aus Sterilitätsgründen wird es vermutlich erforderlich sein, für jeden Mikroskopiervorgang einen neuen, sterilen, mit Ansätzen versehenen Deckel einzusetzen. Da in einem üblichen Versuchszeitraum von z.B. einer Woche ca. siebenmal mikroskopiert wird, hieße das im Extremfall, daß pro Platte und Versuch sieben Deckel verbraucht werden.

Diesem Problem kann mit einer Ausgestaltung gemäß Anspruch 11 begegnet werden. Danach ist vorgesehen, daß der mit den Ansätzen versehene Deckel in unterschiedlichen Höhenpositionen arretierbar auf der Platte anordenbar ist. Der Deckel kann z.B. eine Mikroskopierposition einnehmen, bei der seine Ansätze in Kontakt mit den Flüssigkeitsoberflächen sind. In einer weiteren, Belüftungsposition, ist der Deckel etwas angehoben, und die Ansätze reichen nicht mehr in die Flüssigkeit. Diese Ausgestaltung hat gegenüber der zuvor besprochenen den Vorteil, daß sie relativ einfach, im einfachsten Fall durch eine Klemmverbindung gemäß Anspruch 12 oder Rastenverbindung zwischen Deckel und Platte, zu verwirklichen ist.

Im Hinblick auf die erforderliche Belüftung der Probenbehälter kann man aber auch gemäß Anspruch 13 vorsehen, daß die obere Öffnung des jede Behälteröffnung umgebenden Raumes mit einer mit den oberen Rändern der Seitenwände flüssigkeitsdicht verbundenen, transparenten, gasdurchlässigen Folie verschlossen ist. Die eingesetzte Folie ist hochelastisch und selbstschließend durchstechbar. Während der Aufbewahrung z.B. im Brutschrank ist die Platte lediglich mit der Folie verschlossen. Eine ausreichende Belüftung ist gewährleistet, da die Folie gasdurchlässig ist. Das Befüllen der Probenbehälter kann mittels einer Kanüle geschehen, die durch die Folie eingestochen wird. Nach Herausziehen der Kanüle verschließt die Folie die Durchtrittsstelle automatisch. Soll nun mikroskopiert werden, so wird ein mit Ansätzen versehener Deckel aufgesetzt. Die Folie ist so elastisch, daß sie zusammen mit den Ansätzen auf die Flüssigkeitsoberfläche abgesenkt werden kann. Nach Abnehmen des Deckels nimmt die Folie wieder ihre Ausgangsform an. Eine Folie mit den erforderlichen Eigenschaften läßt sich z.B. auf Basis eines thermoplastischen Elastomers herstellen. Die Ausgestaltung hat den Vorteil, daß die Belüftung in allen Behältern gleichmäßig erfolgt und daß nicht zwangsläufig mit einem sterilen erfindungsgemäßen Deckel mikroskopiert werden muß, d.h. es können sogar mehrere mit der angesprochenen Folie verschlossene Platten mit ein und demselben Deckel nacheinander ausgewertet werden.

In einer weiteren vorteilhaften Ausgestaltung ist gemäß Anspruch 14 vorgesehen, daß die Behälter der Mikrotiterplatte aus einem Kunststoff mit TC-Qualität (tissue culture) hergestellt sind. Derartige Behälter sind für die Zellen einschließlich ihrer empfindlichen Membranen untoxisch. Eventuelle Beeinträchtigungen der Zellanzucht durch Materialemissionen sind ausgeschlossen. In Abhängigkeit von der Materialauswahl bzw. dessen Ausrüstung erhält man Probebehälter, die einerseits eine Zellanzucht in Suspension oder andererseits das bei virologischen Untersuchungen häufig gewünschte Anwachsen der Zellen in einer Schicht (Monolayer) auf z.B. dem Behälterboden ermöglichen.

In diesem Zusammenhang kann gemäß Anspruch 15 vorgesehen sein, daß die Bodenbereiche der Probenbehälter gezielt mit Chromschwefelsäure in der oben beschriebenen Weise nachbehandelt werden. Auf diese Weise ist es möglich, diese Bereiche gezielt mit zelladhärierenden Eigenschaften zu versehen bzw. dort vorhandene derartige Eigenschaften zu verstärken. Die Behandlung mit Chromschwefelsäure ist ein dem Fachmann geläufiges Verfahren, das ohne Risiko eventueller toxischer Rückstände durchgeführt werden kann. Beschrieben wurde ein derartiges Verfahren z.B. von "R.Klöcking et al., in Z. med. Lab. diagn. 32 (1991) unter dem Titel: Vorbehandlung von Polystyren-Mikrotestplatten zur Verwendung für Zell- und Gewebekulturen".

Gemäß Anspruch 16 ist vorgesehen, daß der Deckel aus hydrophobem Material hergestellt ist. Auf diese Weise soll die Ausbildung von Kriechwasser verhindert werden und damit die Gefahr der Kontamination zwischen benachbarten Behältern weiter herabgesetzt werden.

Nach Anspruch 17 ist schließlich in vorteilhafter Weise vorgesehen, daß die Mikrotiterplatte so ausgestaltet ist, daß die Außenflächen ihrer Behälterböden in aufgestelltem Zustand so dicht wie möglich an der Stellfläche gehalten sind, ohne jedoch mit ihr in Berührung zu kommen. Diese Ausgestaltung trägt der Tatsache Rechnung, daß die Mikrotiterplatten in aller Regel mit einem Inversmikroskop ausgewertet und dabei auf einem Kreuztisch verschoben werden. Die Böden der Behälter müssen dabei so dicht wie möglich zu dem Objektiv des Mikroskops angeordnet sein. Die Aussenflächen der Böden dürfen allerdings nicht auf dem Kreuztisch aufsetzen, da es beim Verschieben der Platten sonst zu Verkratzungen kommen könnte, die die optische Qualität beeinträchtigen.

Die Erfindung soll im folgenden anhand mehrerer Abbildungen, die unterschiedliche Ausführungsbeispiele zeigen, näher erläutert werden.
- Fig. 1: zeigt einen Längsschnitt durch ein Ausführungsbeispiel der erfindungsgemäßen Mikrotiterplatte, bei der die Probenbehälter nach oben freistehend ausgebildet sind.
- Fig. 2 und 3: zeigen ebenfalls im Längsschnitt weitere Ausführungsbeispiele der erfindungsgemäßen Mikrotiterplatte, bei der die Probenbehälter nach oben hin in einen sich erweiternden Raum münden.
- Fig. 4: zeigt ein Ausführungsbeispiel, bei dem die Mikrotiterplatte mit einer hochelastischen transparenten Folie verschlossen ist.
- Fig. 5: zeigt ein letztes Ausführungsbeispiel, bei dem der Deckel der Mikrotiterplatte in unterschiedlichen Höhenpositionen anordenbar ist.

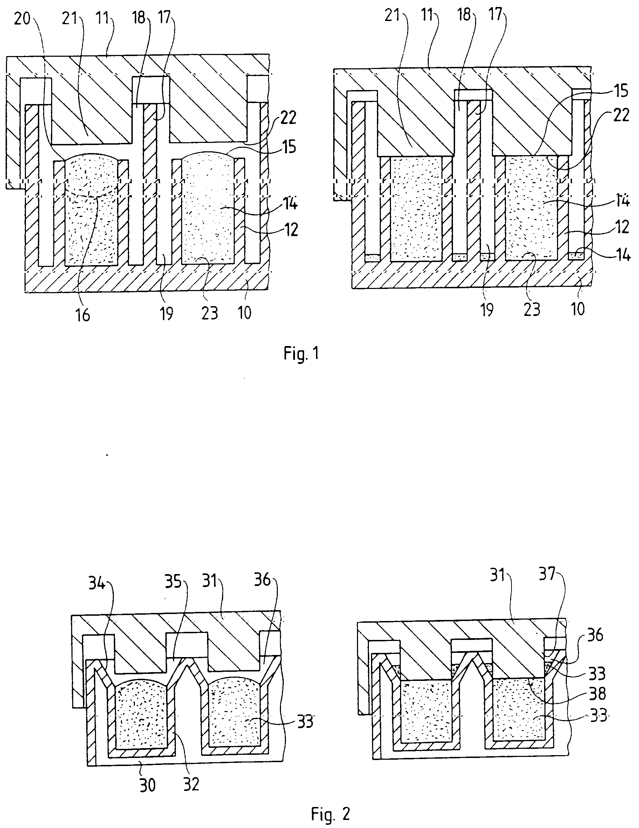

Fig. 1 zeigt eine Mikrotiterplatte 10 mit einem Deckel 11. Die Abbildung ist in zwei Unterabbildungen aufgegliedert. Im linken Teil der Abbildung ist der Deckel 11 nicht vollständig auf die Platte 10 abgesenkt. Dies entspricht der zuvor erläuterten Belüftungsposition. Der rechte Teil stellt dagegen die Mikroskopierposition dar, bei der der Deckel 11 vollständig auf die Platte 10 abgesenkt ist.

Die Mikrotiterplatte 10 weist eine Reihe von Probenbehältern 12 auf, die randvoll mit Flüssigkeit 14 gefüllt sind. Im linken Teil der Abbildung erkennt man, daß die Flüssigkeit 14 eine konvex gewölbte Oberfläche 15 aufweist. Bei nicht randvoll gefüllten Probenbehältern ist davon auszugehen, daß die Flüssigkeit eine nach unten eingewölbte Oberfläche 16 aufweist. In beiden Fällen stört die Wölbung der Oberflächen 15 oder 16 die Mikroskopie.

Jeder Probenbehälter 12 ist von querverlaufenden Seitenwänden 17 und längsverlaufenden Seitenwänden 18 umgeben. Die Seitenwände 17 und 18 begrenzen jeweils einen Raum 19, der nach oben hin über die Öffnungen 20 der Behälter 12 übersteht. Der Deckel 11 seinerseits ist mit nach unten weisenden Ansätzen 21 versehen, die jeweils ein plan ausgebildetes freies Ende 22 aufweisen.

Wird nun, wie im rechten Teil der Abbildung dargestellt, der Deckel 11 auf die Platte 10 abgesenkt, so geraten die freien Enden 22 der Ansätze 21 in schlüssigen Kontakt mit der Flüssigkeitsoberfläche 15, wobei die Probenbehälter gegebenenfalls vorher aufgefüllt werden müssen. Die im Probenbehälter 12, z.B. in seinem Bodenbereich 23 befindlichen Zellen können nun problemlos durch den Deckel 11 und den Ansatz 21 mit einem Mikroskop, insbesondere einem Phasenkontrastmikroskop untersucht werden. Es versteht sich, daß der Deckel 11, der Ansatz 21 und mindestens der Bodenbereich 23 des Behälters 12 aus transparentem Material hergestellt sein müssen.

Beim Absenken des Deckels 11 verdrängte Flüssigkeit 14 fließt über die Behälteröffnung 20 ab und sammelt sich am Boden des Raumes 19. Eine Kontaminationsgefahr benachbarter Probenbehälter besteht nicht.

Fig. 2 zeigt in ähnlicher Darstellung wie Fig. 1 ein weiteres Ausführungsbeispiel einer erfindungsgemäßen Mikrotiterplatte 30 mit Deckel 31, einmal in der Belüftungsposition (linker Bereich der Abbildung) und einmal in der Mikroskopierposition (rechter Bereich der Abbildung).

Bei dem hier gezeigten Typ von Mikrotiterplatte sind Probenbehälter 32 vorgesehen, die frei nach unten hängen. Dieser Typ Platte unterscheidet sich also von dem in Fig. 1 dargestellten, bei dem die Probenbehälter in ihrem Bodenbereich gehalten sind und nach oben hin überstehen. Wie zuvor bereits mehrfach ausgeführt, kann die Erfindung mit unterschiedlichen Typen von Mikrotiterplatten umgesetzt werden. Dies soll mit der Darstellung der unterschiedlichen Platten in den Fig. 1 und 2 deutlich gemacht werden.

Die in Fig. 2 dargestellten Probenbehälter 32 sind mit Flüssigkeit 33 gefällt und nach oben hin von quer verlaufenden Seitenwänden 34 und längsverlaufenden Seitenwänden 35 umgeben, die einen trichterförmigen Raum 36 begrenzen. Der Deckel 31 ist (genau wie in. Fig. 1) mit nach unten weisenden Ansätzen 37 versehen, die jeweils ein planes freies Ende 38 aufweisen. Im linken Teil der Abbildung sind die Ansätze außer Kontakt mit der Flüssigkeit 33. Im rechten Teil der Abbildung ist der Deckel 31 abgesenkt und die planen freien Enden 38 sind in schlüssigem Kontakt mit der Flüssigkeit 33. Die beim Absenken des Deckels verdrängte Flüssigkeit tritt dabei in den Raum 36 ein. Auch hier fängt der durch die Seitenwände 34 und 35 begrenzte Raum 36, die durch die Ansätze 37 verdrängte Flüssigkeit 33 auf. Eine Kontamination zwischen benachbarten Probenbehältern 32 wird damit verhindert. Ein besonderer Vorteil des in Fig. 2 dargestellten Ausführungsbeispieles bestellt darin, daß, wenn der Deckel 31 nach dem Mikroskopiervorgang wieder in die Belüftungsposition angehoben wird, die verdrängte Flüssigkeit 33 wieder in den Probenbehälter 32 zurücklaufen kann. Auf diese Weise kann das Probevolumen konstant gehalten werden.

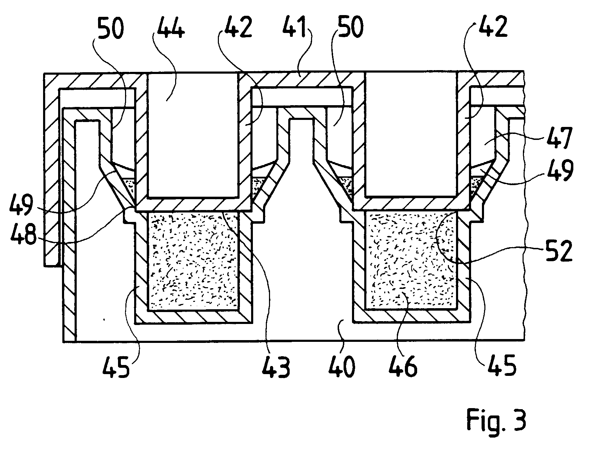

Fig. 3 zeigt ein weiteres Ausführungsbeispiel einer Mikrotiterplatte 40 mit Deckel 41. In dieser Darstellung ist der Deckel 41 allerdings nur in der abgesenkten Position dargestellt.

Im Gegensatz zum zuvor besprochenen Ausführungsbeispiel sind in diesem Fall an dem Deckel 41 nach unten weisende Ansätze 42 mit planen Abschlußflächen 43 vorgesehen, in denen jeweils ein von der Oberfläche des Deckels 41 sich bis zur planen Abschlußfläche 43 erstreckender Hohlraum 44 ausgebildet ist.

Weiterhin dargestellt sind Probenbehälter 45 mit Öffnungen 52, an die sich ein nach oben erweiternder Raum 47 anschließt, der von seitlichen Wänden 48, 49 und 50 begrenzt ist. Man erkennt, daß der unmittelbar auf die Öffnungen 52 der Probenbehälter 45 folgende, durch die Wände 48 begrenzte Bereich des Raumes 47 einen Durchmesser aufweist, der nur geringfügig größer als der Durchmesser des Ansatzes 42 im Bereich seiner planen Abschlußfläche 43 ist. Der durch die Wände 48 begrenzte Bereich des Raumes 47 dient, wie oben ausgeführt, zur Zentrierung des Ansatzes 42 zu der Öffnung 52 des Probebehälters 45.

Die sich anschließenden seitlichen Wände 49 begrenzen einen sich trichterförmig erweiternden Bereich des Raumes 47. Aus diesem Bereich kann eventuell durch den Ansatz 42 verdrängte Probeflüssigkeit 46 nach dem Anheben des Deckels 41 problemlos in den Probenbehälter 45 zurücklaufen. Für ein absolut rückstrandsfreies Zurücklaufen kann man zusätzlich, wie oben bereits angesprochen, die Wandabschnitte 49 und gegebenenfalls auch die Wandabschnitte 48 mittels Chromschwefelsäurebehandlung benetzbar machen.

Das hier beschriebene Ausführungsbeispiel erlaubt damit ein besonders sicheres und sauberes Arbeiten. Die Ausbildung der Ansätze 42 mit einem Hohlraum 44 führt dazu, daß während des Mikroskopierens lediglich die plane Abschlußfläche 43 und der Boden des Behälters 45 im Lichtweg liegen. Um die optische Qualität zu optimieren, können der Ansatz 42 und der Behälter 45 im Wege der Einzelspritzung mit geringsten Wandstärken und ohne Fehler (Fließnähte etc.) hergestellt werden. Es versteht sich, daß der Querschnitt des Hohlraums 44 mindestens den Querschnitt der Öffnung 52 abdecken muß.

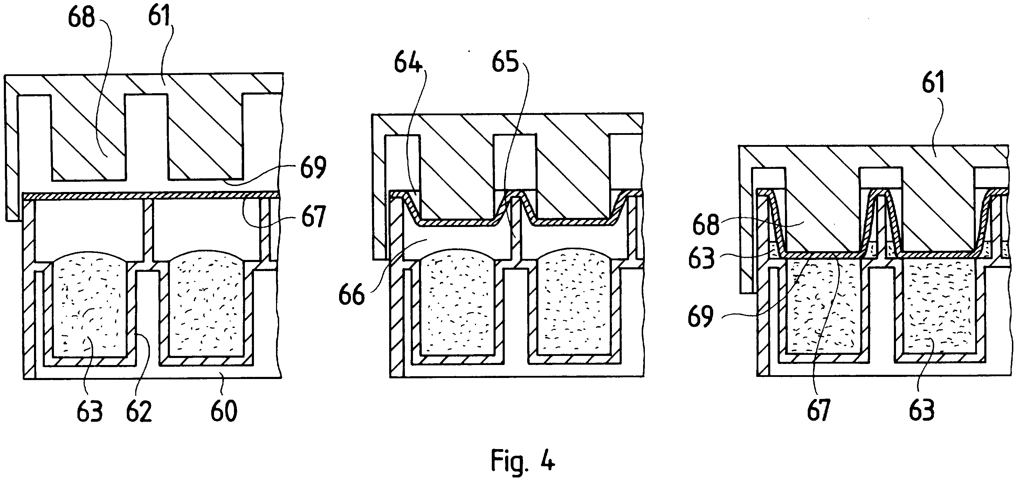

Fig. 4 zeigt wiederum eine Mikrotiterplatte 60 mit Deckel 61. In dieser Abbildung sind allerdings drei Relativpositionen des Deckels 61 zur Platte 60 dargestellt.

Die Platte 60 weist eine Reihe von Probenbehältern 62 auf, die jeweils mit Flüssigkeit 63 gefüllt sind. Auch hier sind längsverlaufende Wände 64 und querverlaufende Wände 65 vorgesehen, die einen sich nach oben bin an die Behälter 63 anschließenden Raum 66 begrenzen. Die Besonderheit an diesem Ausführungsbeispiel besteht darin, daß die Räume 66 nach oben hin mit einer Folie 67 verschlossen sind. Die Folie 67 ist hochelastisch, transparent und gasdurchlässig. Sie kann weiterhin mit einer Kanüle durchstochen werden, wobei sich nach Wiederherausziehen der Kanüle die Durchtrittsstelle automatisch verschließt.

In der Abbildung ist in drei Schritten das Aufsetzen des Deckels 61 auf die Platte 60 dargestellt. Der Deckel 61 ist mit Ansätzen 68 versehen, deren freie Enden 69 plan ausgebildet sind. Im linken Teil der Abbildung befinden sich die freien Enden 69 noch etwas oberhalb der Folie 67. Im mittleren Teil der Abbildung ist der Deckel 61 weiter abgesenkt worden. Die Ansätze 68 sind mit ihren freien Enden 69 in Kontakt mit der Folie 67 gekommen und haben diese nach unten ausgedehnt. Im rechten Teil der Abbildung schließlich befindet sich der Deckel 61 in Mikroskopierposition. In dieser Position drücken die Ansätze 68 mit ihren freien Enden 69 die Folie 67 auf die Flüssigkeit 63, wodurch ein schlüssiger Kontakt hergestellt wird. Da der Ansatz 68 und auch die Folie 67 transparent sind, ist eine mikroskopische Untersuchung der Probenbehälter 62 ohne weiteres möglich. Die Vorteile dieses Ausführungsbeispieles wurden bereits zuvor erläutert. Es soll an dieser Stelle nicht weiter darauf eingegangen werden.

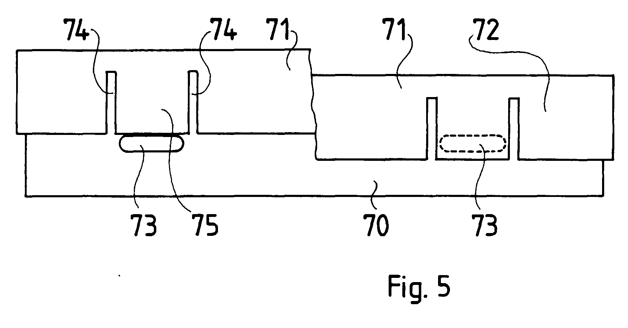

Fig. 5 schließlich zeigt in Seitenansicht eine Mikrotiterplatte 70 mit in unterschiedlichen Höhenpositionen aufgesetztem Deckel 71, der die üblicherweise vorgesehenen, umlaufenden herabgezogenen Seitenwände 72 aufweist. An dem Außenumfang der Platte 70 sind Vorsprünge 73 ausgebildet. Die Vorsprünge 73 sind so dimensioniert, daß der Deckel 71 einerseits mit der unteren Kante seiner Seitenwand 72 darauf aufsetzen kann (siehe linker Bereich der Abbildung) und andererseits mit einem inneren Bereich der Seitenwand 72 in Klemmeingriff mit den Vorsprüngen 73 gebracht werden kann (siehe rechter Bereich der Abbildung).

Als Besonderheit ist nun vorgesehen, daß die Seitenwand 72 Schlitze 74 aufweist, die einen Wandbereich 75 begrenzen, der für den beabsichtigten Eingriff mit den Vorsprüngen 73 vorgesehen ist. Bei dieser speziellen Ausbildung der Seitenwand 72 läßt sich der rechts dargestellte Klemmeingriff besonders einfach lösen. Es genügt, die begrenzt elastisch verformbare Seitenwand 72 in Längsrichtung gesehen in einem mittleren Bereich einzudrücken, woraufhin sieh dann die Wandabschnitte 75 geringfügig abspreizen und den Eingriff mit dem Vorsprung 73 gelockert wird. Der Deckel 71 kann dann ohne größere Probleme abgehoben werden. Es kann weiterhin vorgesehen sein, daß der Wandabschnitt 75 im Bereich seiner unteren Kante etwas angeschrägt ist. Auf diese Weise läßt er sich durch einfachen Druck von oben über den Vorsprung 73 in den rechts dargestellten Klemmeingriff verschieben.

## Patentansprüche

1. Mikrotiterplatte (10, 30, 40, 60, 70) mit mindestens einem Probenbehälter (12, 32, 45, 62) und mit einem Deckel (11, 41, 61), der auf die Mikrotiterplatte aufgesetzt die Behälteröffnungen (20, 52) abdeckt, wobei Mikrotiterplatte und Deckel aus transparentem Material hergestellt sind und der Deckel mit nach unten weisenden Ansätzen (21, 37, 42, 68) versehen ist, deren freies Ende eine plane Abschlußfläche (22, 38, 43, 69) aufweist und die so auf dem Deckel angeordnet und ausgebildet sind, daß bei aufgesetztem Deckel jeder Ansatz einem Behälter zugeordnet ist, **dadurch gekennzeichnet**, daß auf der Platte (10, 30, 40, 60, 70) jede Behälteröffnung (20, 52) seitlich umgebende, flüssigkeitsdichte Wände (17, 18; 34, 35; 48, 49, 50; 65, 66) ausgebildet sind, die jeweils einen nach oben offenen Raum (19, 36, 47, 66) mit im Vergleich zu der Behälteröffnung (20, 52) größerem Querschnitt begrenzen, und daß die am freien Ende (22, 38, 43, 69) des Ansatzes (21, 37, 42, 68) ausgebildete plane Abschlußfläche mindestens den Behälteröffnungsquerschnitt abdeckt und bei aufgesetztem und vollständig abgesenktem Deckel (11, 41, 61) auf der Behälteröffnung (20, 52) aufsetzt.

2. Mikrotiterplatte nach Anspruch 1, **dadurch gekennzeichnet**, daß die Ansätze (42) hohl ausgebildet sind, wobei der Querschnitt des in den Ansätzen (42) vorgesehenen Hohlraumes (44) mindestens dem Querschnitt der Behälteröffnung (52) entspricht.

3. Mikrotiterplatte nach Anspruch 2, **dadurch gekennzeichnet**, daß sich der Hohlraum (44) durch den Deckel (41) bis zur am freien Ende (43) des Ansatzes (42) vorgesehenen planen Abschlußfläche erstreckt.

4. Mikrotiterplatte nach einem der Ansprüche 1 - 3, **dadurch gekennzeichnet**, daß sich der von den seitlichen Wänden (34, 35; 48, 49, 50) begrenzte Raum (36, 47) von den Behälteröffnungen (52) nach oben hin erweitert.

5. Mikrotiterplatte nach einem der Ansprüche 1 - 4, **dadurch gekennzeichnet**, daß sich der von den seitlichen Wänden (49) begrenzte Raum (41) zumindest bereichsweise nach oben hin trichterförmig erweitert.

6. Mikrotiterplatte nach einem der Ansprüche 1 - 5, **dadurch gekennzeichnet**, daß ein an die Behälteröffnung angrenzender Bereich des Raumes benetzbar ausgebildet ist.

7. Mikrotiterplatte nach einem der Ansprüche 1 - 6 **dadurch gekennzeichnet**, daß der Raum (47) einen an die Behälteröffnung (52) anschließenden durch Wände (48) begrenzten Bereich mit über seine Höhe konstantem Querschnitt aufweist, wobei der Querschnitt dieses Bereiches geringfügig größer als der Außenquerschnitt der Ansätze (42) im Bereich ihrer freien Enden (43) ist und seine Höhe nur einen Bruchteil der gesamten Höhe des Raumes (47) ausmacht.

8. Mikrotiterplatte nach einem der Ansprüche 1 bis 7, **dadurch gekennzeichnet**, daß mindestens ein Teil der Behälter (12) so auf der Platte (10) angeordnet ist, daß sie mit ihren an die Öffnung (20) angrenzenden Bereichen frei überstehen.

9. Mikrotiterplatte nach Anspruch 8, **dadurch gekennzeichnet**, daß die seitlichen Wände (17, 18) auch den überstehenden Bereich der Behälter (12) umgeben.

10. Mikrotiterplatte nach einem der Ansprüche 1 bis 9, die mit einer Vielzahl von in parallelen Reihen angeordneten Behältern versehen ist, **dadurch gekennzeichnet**, daß die auf ihr ausgebildeten seitlichen, jede Behälteröffnung umgebenden Wände durch gitterartig angeordnete parallel und senkrecht zu den Behälternreihen verlaufende Stege gebildet sind.

11. Mikrotiterplatte nach einem der Ansprüche 1 bis 10, **dadurch gekennzeichnet**, daß der Deckel (11, 31, 41, 61, 71) in unterschiedlichen Höhenpositionen arretierbar auf der Platte (10, 30, 40, 60, 70) anordenbar ist.

12. Mikrotiterplatte nach einem der Ansprüche 1 - 11, **dadurch gekennzeichnet**, daß auf dem Außenumfang der Platte (70) in gleicher Höhe und im Bereich mindestens zweier einander gegenüberliegender Seitenflächen nach außen weisende Vorsprünge (73) ausgebildet sind, die so dimensioniert sind, daß der Deckel (71) mit entsprechenden Kantenbereichen seiner Seitenwände (72) darauf aufsetzbar ist und andererseits mit inneren Bereichen seiner Seitenwände (72) in unterschiedlichen Höhenpositionen in klemmenden Eingriff mit den Vorsprüngen (73) bringbar ist.

13. Mikrotiterplatte nach einem der Ansprüche 1 und 12, **dadurch gekennzeichnet**, daß die obere Öffnung des jede Behälteröffnung umgebenden Raumes (36) mit einer mit den oberen Rändern der Seitenwände (44, 45) flüssigkeitsdicht verbundenenen, transparenten, gasdurchlässigen Folie (47) verschlossen ist, die weiterhin hochelastisch und selbstschließend durchstechbar ist.

14. Mikrotiterplatte nach einem der Ansprüche 1 bis 13, **dadurch gekennzeichnet**, daß sie aus einem Kunststoff mit TC-Qualität hergestellt ist.

15. Mikrotiterplatte nach einem der Ansprüche 1 bis 14, **dadurch gekennzeichnet**, daß der Bodenbereich des Behälters zur Erhöhung seiner adhärierenden Eigenschaften mit Chromschwefelsäure nachbehandelt ist.

16. Mikrotiterplatte nach einem der Ansprüche 1 bis 15, **dadurch gekennzeichnet**, daß der Deckel aus hydrophobem Material hergestellt ist.

17. Mikrotiterplatte nach einem der Ansprüche 1 - 16, **dadurch gekennzeichnet**, daß im aufgestellten Zustand die Außenwände der Behälterböden dicht an der Stellfläche, jedoch ohne Berührung mit ihr gehalten sind.

## Claims

1. Microtitration plate (10, 30, 40, 60, 70) including at least one sample container (12, 32, 45, 62) and including a lid (11, 41, 61), which, when placed on the microtitration plate, covers the container openings (20, 52), the microtitration plate and lid being made of transparent material and the lid being provided with downwardly pointing lugs (21, 37, 42, 68), whose free ends have a plane end surface (22, 38, 43, 69) and which are so arranged on the lid and constructed that when the lid is in position each lug is associated with a container, characterised in that liquid-tight walls (17, 18; 34, 35; 48, 49, 50; 65, 66) laterally surrounding each container opening (20, 52) are formed on the plate (10, 30, 40, 60, 70) which each define an upwardly open space (19, 36, 47, 66) with a cross sectional area which is relatively large in comparison to the container opening (20, 52) and that the plane end surface formed at the free end (22, 38, 43, 69) of the lug (21, 37, 42, 68) covers at least the cross sectional area of the container opening and rests on the container opening (20, 52) when the lid (11, 41, 61) is positioned and completely lowered.

2. Microtitration plate as claimed in Claim 1, characterised in that the lugs (42) are hollow, the cross sectional area of the space (44) provided within the lugs (42) corresponding at least to the cross sectional area of the container opening (52).

3. Microtitration plate as claimed in Claim 2, characterised in that the space (44) extends through the lid (41) to the plane end surface provided at the free end (43) of the lug (42).

4. Microtitration plate as claimed in one of the Claims 1-3, characterised in that the space (36, 47) defined by the lateral walls (35, 35; 48, 49, 50) broadens upwardly from the container openings (52).

5. Microtitration plate as claimed in one of Claims 1-4, characterized in that the space (47) defined by the lateral walls (49) broadens upwardly in the manner of a funnel, at least in certain regions.

6. Microtitration plate as claimed in one of Claims 1-5, characterized in that a region of the space adjoining the container opening is constructed to be wettable.

7. Microtitration plate as claimed in one of Claims 1-6, characterized in that the space (47) has a region of constant cross section over its height adjacent to the container opening (52) defined by walls (48), the cross sectional area of this region being slightly greater than the external cross sectional area of the lugs (42) in the region of their free ends (43) and its height being only a fraction of the overall height of the space (47)

8. Microtitration plate as claimed in one of Claims 1-7, characterized in that at least a proportion of the containers (12) is so arranged on the plate (10) that their regions adjoining the opening (20) are freely upstanding.

9. Microtitration plate as claimed in Claim 8, characterized in that the lateral walls (17, 18) also surround the upstanding region of the containers (12).

10. Microtitration plate as claimed in one of Claims 1-9 which is provided with a plurality of containers arranged in parallel rows, characterized in that the lateral walls formed on it surrounding each container opening are constituted by webs arranged in the manner of a grid extending parallel and perpendicular to the rows of containers.

11. Microtitration plate as claimed in one of Claims 1-10, characterized in that the lid (11, 31, 41, 61, 71) may be arranged on the plate (10, 30, 40, 60, 70) so as to be lockable in different vertical positions.

12. Microtitration plate as claimed in one of Claims 1-11, characterised in that formed on the external periphery of the plate (70) at the same height and in the vicinity of at least two mutually opposing side surfaces there are outwardly directed projections (73), which are so dimensioned that the lid (71) may be placed thereon with corresponding edge regions on its side walls (72) and, on the other hand, is movable into gripping engagement with the projections (73) with inner regions of its side walls (72) in different vertical positions.

13. Microtitration plate as claimed in one of Claims 1 and 12, characterised in that the upper opening of the space (36) surrounding each container opening is sealed with a transparent, gas permeable film (47) which is connected in a liquid-tight manner to the upper edges of the side walls (44, 45) and which may further be pierced in a highly elastic and self-closing manner.

14. Microtitration plate as claimed in one of Claims 1-13, characterised in that it is made of a plastics material of tissue-culture quality.

15. Microtitration plate as claimed in one of Claims 1-14, characterised in that the base region of the container is post-treated with chromosulfuric acid to increase its adhesive properties.

16. Microtitration plate as claimed in one of Claims 1-15, characterised in that the lid is made of hydrophobic material.

17. Microtitration plate as claimed in one of Claims 1-16, characterised in that in the assembled state the outer walls of the container bases are held close to the adjustment surface but without contacting it.

## Revendications

1. Plaque de microtitration (10, 30, 40, 60, 70) avec au moins un puits (12, 32, 45, 62) et un couvercle (11, 41, 61) qui, posé sur la plaque de microtitration. recouvre les ouvertures (20, 52) des puits, la plaque de microtitration et le couvercle étant réalisés en un matériau transparent et le couvercle étant muni de saillies (31, 37, 42, 69) orientés vers le bas dont l'extrémité libre présente une surface d'obturation plane et dont l'agencement et la conformation sur le couvercle sont telles que, le couvercle étant posé sur la plaque, chaque saillie est affectée à un puits, **caractérisée en ce que** sur la plaque (10, 30, 40, 60, 70) sont formées des parois (17, 18; 34, 35; 48, 49, 50; 65, 66) étanches aux liquides entourant latéralement chaque ouverture (20, 52) d'un puits, chaque paroi délimitant un espace (19, 36, 47, 66) ouvert vers le haut et d'une section supérieure à celle de l'ouverture (20, 52) des puits, et en ce que la surface d'obturation plane formée à l'extrémité libre (22, 38, 43, 69) de la saillie (21, 37, 42, 68) recouvre au moins la section d'ouverture des puits et, lorsque le couvercle (11, 41, 61) est mis en place et entièrement abaissé, repose sur l'ouverture (20, 52) du puits.

2. Plaque de microtitration selon la revendication 1, **caractérisée en ce que** les saillies (42) sont creuses, la section de la cavité (44) ainsi prévue dans les saillies (42) correspond au moins à la section de l'ouverture (52) des puits.

3. Plaque de microtitration selon la revendication 2, **caractérisée en ce que** la cavité (44) s'étend dans le couvercle (41) au moins jusqu'à la surface plane prévue à l'extrémité libre (43) de la saillie (42).

4. Plaque de microtitration selon l'une des revendications 1 - 3, **caractérisée en ce que** l'espace (36, 47) délimité par les parois latérales (34, 35; 48, 49. 50) des ouvertures (52) des puits est évasé vers le haut.

5. Plaque de microtitration selon l'une des revendications 1 - 4, **caractérisée en ce que** l'espace (47) délimité par les parois latérales (49) s'évase sur au moins une zone en entonnoir vers le haut.

6. Plaque de microtitration selon l'une des revendications 1 - 5, **caractérisée en ce qu'**une partie de l'espace contiguë à l'ouverture du puits est conformée de façon à pouvoir être humectée.

7. Plaque de microtitration selon l'une des revendications 1 - 6, **caracterisée en ce que** l'espace (47) présente une zone contiguë à l'ouverture (52) du puits et délimitée par des parois (48) et dont la section est constante sur toute sa hauteur, la section de cette zone étant légèrement supérieure à la section extérieure des saillies (42) au niveau de leurs extrémités libres (43), et sa hauteur ne s'étendant que sur une fraction de la hauteur totale de l'espace (47).

8. Plaque de microtitration selon l'une des revendications 1 à 7, **caractérisée en ce qu'**une partie au moins des puits (12) soit agencée sur la plaque (10) de façon à ce que leur zone contiguë à l'ouverture (20) fasse librement saillie en hauteur.

9. Plaque de microtitration selon la revendication 8, **caractérisée en** ce que les parois latérales (17, 18) entourent également la zone en saillie des puits (12).

10. Plaque de microtitration selon l'une des revendications 1 à 9 munie d'un grand nombre de puits agencés en rangées parallèles, **caractérisée en ce que** les parois latérales entourant chaque ouverture de puits sont formées par des barrettes agencées en grille et orientées parallèlement et perpendiculairement aux rangées de puits.

11. Plaque de microtitration selon l'une des revendications 1 à 10, **caractérisée en ce que** le couvercle (11, 31, 41, 61, 71) peut être disposé sur la plaque (10, 30, 40, 60, 70) de façon à pouvoir être arrêté à différentes positions en hauteur.

12. Plaque de microtitration selon l'une des revendications 1 à 11, **caractérisée en ce que** sur le périmètre extérieur de la plaque (70) sont formées, à une même hauteur et contre au moins deux surfaces latérales opposées, des saillies (73) orientées vers l'extérieur et dimensionnées de façon à ce que le couvercle (71) puisse reposer sur elles avec le bord de régions correspondantes de ses parois latérales (72) et, d'autre part avec des régions de la face interne de ses parois latérales (72), se caler à différentes hauteurs contre les saillies (73).

13. Plaque de microtitration selon l'une des revendications 1 à 12, **caractérisée en ce que** l'ouverture supérieure de l'espace (36) entourant chaque ouverture de puits soit obturée par une pellicule (47) transparente, perméable aux gaz et reliée de façon étanche aux liquides aux bords supérieurs des parois latérales (44, 45), cette pellicule (47) étant par ailleurs d'une grande élasticité et pouvant être perforée de façon à se refermer d'elle même lorsqu'on la perfore.

14. Plaque de microtitration selon l'une des revendications 1 à 13, **caractérisée en ce qu**'elle est réalisée en un matériau de qualité TC (cultures de tissus).

15. Plaque de microtitration selon l'une des revendications 1 à 14, **caractérisée en ce que** le fond du puits a subi un traitement postérieur à l'acide chromosulfurique à fin d'augmenter ses qualités d'adhésion.

16. Plaque de microtitration selon l'une des revendications 1 à 15, **caractérisée en ce que** le couvercle est réalisé en un matériau hydrophobe.

17. Plaque de microtitration selon l'une des revendications 1 à 16, **caractérisée en ce que**, lorsqu'elle est en place, la paroi extérieure des fonds des puits soit proches de la surface où elle est posée sans cependant la toucher.
